# EUROPÄISCHE PATENTSCHRIFT

(11) **EP 3 461 660 B1**
(45) Veröffentlichungstag und Bekanntmachung des Hinweises auf die Patenterteilung: **01.06.2022**
(21) Anmeldenummer: 18186502.3
(22) Anmeldetag: 31.07.2018
(51) Int. Cl.: B60G 3/12, A01D 41/02, A01D 67/00, B62D 21/12

(54) **MÄHDRESCHER**
COMBINE
MOISSONNEUSE-BATTEUSE

(30) Priorität: 29.09.2017 DE 10201712267.
(43) Veröffentlichungstag der Anmeldung: 03.04.2019
(73) Patentinhaber: CLAAS Selbstfahrende Erntemaschinen GmbH, 33428 Harsewinkel (DE)
(72) Erfinder: Behra, Jan-Philipp, 33332 Gütersloh (DE); Stockhofe, Hendrik, 48153 Münster (DE); Speckamp, Dirk, 59073 Hamm (DE); Schilder, Frank, 33604 Bielefeld (DE)
(74) Vertreter: CLAAS Gruppe

(56) Entgegenhaltungen:
- EP-A1- 3 162 186
- WO-A1-01/23196
- WO-A1-94/13501
- WO-A1-2017/007394
- DE-A1- 10 240 236
- DE-A1-102013 226 608
- FR-A1- 2 422 544
- FR-A1- 2 425 369
- US-A1- 2013 049 316
- US-B1- 9 688 318

## Beschreibung

Die Erfindung bezieht sich auf einen Mähdrescher, mit einem Chassis, einer Vorderachse und mit einer Hinterachse sowie hinter der Hinterachse angeordneten lenkbaren Stützrädern zur Entlastung der Hinterachse bei Straßenfahrt, wobei die Stützräder aus einer angehobenen Ruhestellung in eine Straßenstellung absenkbar angeordnet sind.

Selbstfahrende Erntemaschinen, insbesondere Mähdrescher weisen in der Regel eine die Hauptlast tragende, nicht lenkbare Vorderachse und eine dahinter angeordnete, lenkbare Hinterachse auf. Wenn diese Erntemaschinen auf dem Feld fahren, ist in der Regel vor der Vorderachse ein Arbeitsgerät angeordnet, welches dafür sorgt, dass die lenkbaren Hinterräder entlastet sind. Bei Straßenfahrt hingegen wird das Arbeitsgerät hinter der Erntemaschine gezogen. Durch den Wegfall des vor der Vorderachse angeordneten Gewichts werden nunmehr die lenkbaren Hinterräder stärker belastet, häufig so stark, dass das zulässige Achsgewicht überschritten wird. Aus diesem Grund gibt es Bestrebungen, die lenkbare Hinterachse zu entlasten. So ist beispielsweise in der EP 3 162 186 eine Hilfsachse beschrieben, welche zwei lenkbare Stützräder aufweist, wobei die Lenkung für die Stützräder über ein Gestänge mit der Lenkung der Hinterräder gekoppelt ist. Hierdurch soll sichergestellt werden, dass die Stützräder bei der Straßenfahrt nicht auf der Straßenoberfläche radieren. Eine ähnliche Anordnung ist in der US 8,820,758 B2 beschrieben. Es offenbart einen Mähdrescher mit einem Chassis einer Vorderachse und mit einer Hinterachse sowie hinter der Hinterachse angeordneten lenkbaren Stützrädern zur Entlastung der Hinterachse bei Straßenfahrt, wobei die Stützräder aus einer ausgehobenen Ruhestellung in eine Fahrstellung absenkbar angeordnet und gemeinsam an einer Hilfsachse angelenkt sind.

Zwar sind die aus dem Stand der Technik bekannten Hilfsachsen geeignet, die lenkbaren Hinterräder der Erntemaschine bei Straßenfahrt zu entlasten; jedoch ist die Anordnung der Stützräder verhältnismäßig aufwändig und erfordert Eingriffe an der Erntemaschine.

Es ist daher Aufgabe der vorliegenden Erfindung, eine selbstfahrende Erntemaschine so zu verbessern, dass die Anordnung der Stützräder konstruktiv möglichst einfach erfolgen kann. Diese Aufgabe wird durch die Lehre des Patentanspruches 1 dadurch gelöst, dass die Stützräder über jeweils eine Schwinge einzeln an einem gemeinsamen Hilfsrahmen angelenkt und unabhängig voneinander nachlaufgesteuert sind, wobei der Hilfsrahmen an dem Chassis befestigt ist.

Diese Lösung ist konstruktiv denkbar einfach, weil nur der Hilfsrahmen an dem Chassis befestigt werden muss, während alle anderen für die Stützräderanordnung benötigten Bauteile an dem Hilfsrahmen befestigt werden. Insbesondere sorgt die Nachlauflenkung der einzelnen Stützräder dafür, dass keine Verbindung mit der Hinterachslenkung vorgesehen werden muss. Diese Stützräderanordnng läßt sich aufgrund ihrer Einfachheit auch nachträglich an bestehende Erntemaschinen anbringen.

Besonders bevorzugt ist, wenn die Schwingen hydropneumatisch gefedert sind. Die Federung kann dabei über dieselbsen Hydraulikzylinder erfolgen, die auch für das Anheben und Absenken der Schwingen und damit der Stützräder vorgesehen sind. Besonders günstig ist es, wenn die hydropneumatischen Federungen jeder Schwinge unabhängig von der hydropneumatischen Federung der anderen Schwinge ansteuerbar ist. Auf diese Weise kann aktiv auf das Fahrverhalten der Erntemaschine auf der Straße Einfluss genommen werden, indem beispielsweise die kurvenäußere Schwinge stärker auf die Straße gedrückt wird als die kurveninnere Schwinge, um somit Wankbewegungen entgegenzuwirken. Auch Nickbewegungen, also Schwingungen um eine horizontale Achse quer zur Fahrtrichtung können durch eine entsprechende Ansteuerung der hydropneumatischen Federung gemildert werden.

In besonders bevorzugter konstruktiver Ausbildung des Hilfsrahmens ist vorgesehen, dass die beiden Anlenkpunkte der Schwingen über Rundrohre miteinander verbunden sind. Diese Rundrohre erstrecken sich horizontal quer zur Fahrtrichtung der Erntemaschine und sind verantwortlich dafür, dass Kräfte, die über die Schwingen in den Hilfsrahmen eingebracht werden, in diesem aufgenommen werden. Zum Einen sind Rundrohre besonders torsionssteif und deshalb konstruktiv für diese Aufgabe gut geeignet. Zum Anderen haben diese Rundrohre aber auch den weiteren Vorteil, dass Verschmutzungen nicht liegenbleiben bzw. leicht entfernt werden können.

Gemäß einer Weiterbildung der Erfindung ist vorgesehen, dass die beiden Stützräder über eine im Wesentlichen vertikale Achse schwenkbar mit der zugehörigen Schwinge verbunden sind. Die Stützräder laufen somit der Schwinge nach und passen sich somit auf einfache Weise einer Kurvenfahrt an, ohne dass aktiv gelenkt werden muss.

In diesem Zusammenhang ist es günstig, wenn im Bereich der vertikalen Schwenkachse jedes Stützrades eine Feder vorgesehen ist, die das jeweilige Stützrad in ausgehobener Stellung der Schwinge zentriert.

Wenn sämtliche für die Anhebung und Absenkung der Stützräder sowie deren Federung erforderlichen Bauteile am Hilfsrahmen angebracht sind, hat das den Vorteil, dass zur Anbringung der Stützradanordnung lediglich der Hilfsrahmen an dem Chassis der Erntemaschine angebracht werden muss. Andere Anpassungsarbeiten sind nicht erforderlich.

Um auf einfache Weise über die Schwingen auch das Fahrverhalten der Erntemaschine beeinflußen zu können, ist es günstig, wenn die hydropneumatische Federung der Schwingen mit Nick- und Wanksensoren verbunden sind, in Abhängigkeit deren Signale der Anpreßdruck des jeweiligen Stützrades auf die Straße verstärkt oder abgeschwächt wird. Gemäß einer bevorzugten Ausführungsform ist an dem Hilfsrahmen ein Anhängerbock mit einem Zugmaul angebracht. Dabei ist besonders günstig, wenn die Tiefe des Anhängerbocks derart bemessen ist, dass das Zugmaul in Fahrtrichtung hinter den Stützrädern liegt. Auf diese Weise ist gewährleistet, dass trotz der zusätzlichen Stützradanordnung das Anhängen der bei der Feldarbeit vor der Vorderachse angeordneten Arbeitsgeräte für die Straßenfahrt einfach ermöglicht ist

Im Folgenden wird die Erfindung anhand einer Zeichnung näher erläutert. Es zeigen:
Fig. 1 ein erfindungsgemäßer Mähdrescher mit einer erfindungsgemäßen Stützradanordnung,

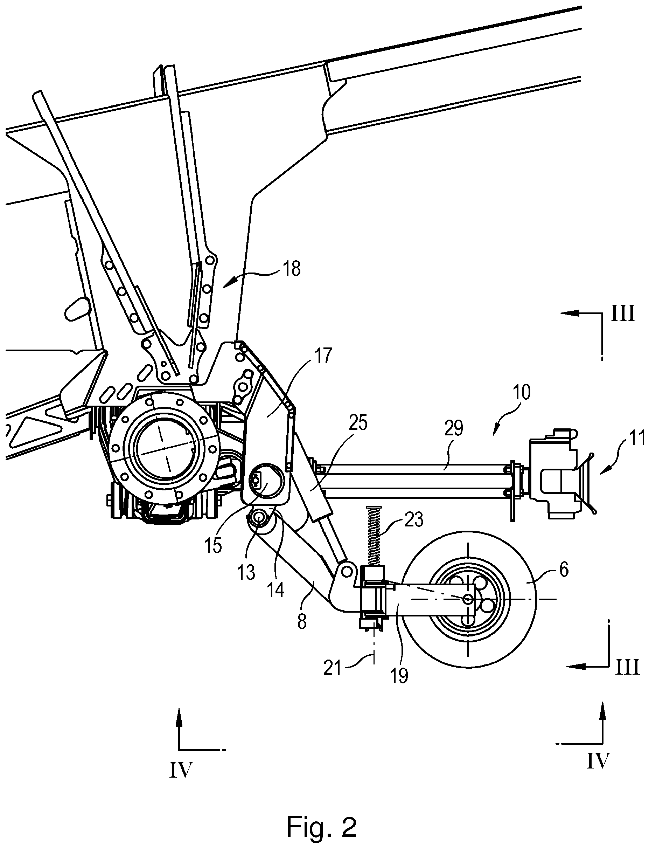

Fig. 2 in einer vergrößerten Seitenansicht die Stützradanordnung aus Fig. 1 bei abgenommenem Hinterrad,

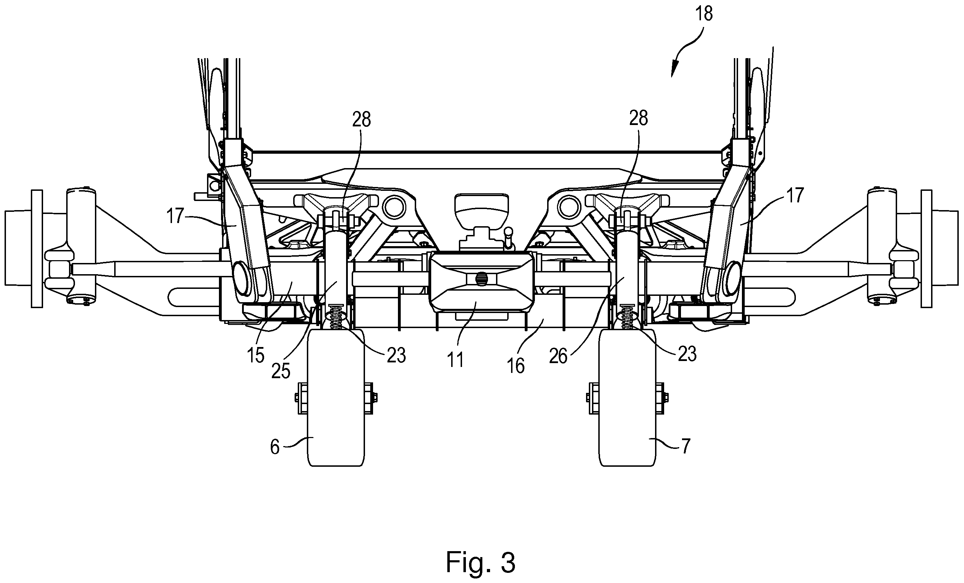

Fig. 3 eine Rückansicht auf die Stützradanordnung gem. Fig. 2 in Richtung der Pfeile III-III in Fig. 2,
Fig. 4 eine Draufsicht auf die Stützradanordnung in Fig. 2 entsprechend der Pfeile IV-IV aus Fig. 2,
Fig. 5 in ähnlicher Ansicht wie Fig. 4 die Stützradanordnung mit ausgelenkten Stützrädern und
Fig. 6 die Stützradanordnung aus Fig. 2 in einer perspektivischen Darstellung von links.

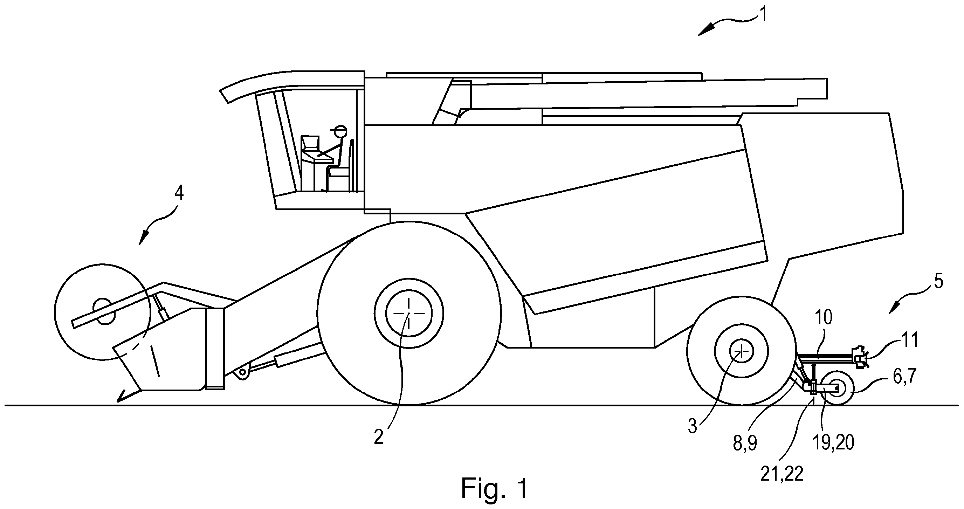

In Fig. 1 ist ein Mähdrescher dargestellt mit einer ungelenkten Vorderachse 2 und einer gelenkten Hinterachse 3. In Fahrtrichtung vor der Vorderachse 2 sind die Arbeitswerkzeuge, wie z.B. eine Schneidwalze 4 angeordnet. Hinter der gelenkten Hinterachse 3 befindet sich eine Stützräderanordnung 5 mit Stützrädern 6 und 7, die nachlaufgelenkt an eine Schwinge 8 bzw. 9 angelenkt sind. Oberhalb und zwischen den beiden Stützrädern 6 und 7 ist ein Anhängebock 10 mit einem Zugmaul 11 vorgesehen. Wie besser aus den nachfolgenden Figuren ersichtlich ist, sind die Schwingen 8 und 9 an einem Hilfsrahmen 12 angelenkt, genauer an einem horizontalen Schwenkgelenk 13 an einer Lasche 14, die mit einer rohrförmigen Quertraverse 15 verbunden ist. Die Traverse 15 bildet zusammen mit weiteren rohrförmigen Trägern 16 die Verbindung zwischen zwei seitlichen Wangen 17, mit welchen der Hilfsrahmen 14 an dem Chassis des Mähdreschers 1 angeschraubt ist. Der Hilfsrahmen 12 ist auf diese Weise so steif gehalten, dass sämtliche durch die Stützradanordnung 5 aufgebrachten Kräfte und Momente in dem Hilfsrahmen 12 aufgenommen werden.

Die Stützradanordnung 5 im Einzelnen umfasst die bereits erwähnten Stützräder 6 und 7. Die Stützräder 6 und 7 werden durch gabelförmige Radträger 19 und 20 gehalten, die über eine vertikale Schwenkachse 21 bzw. 22 mit dem hinteren Ende der Schwingen 8 bzw. 9 verbunden sind. Die vertikalen Schwenkachsen 21 und 22 weisen hier nicht näher dargestellte, keilförmige Führungsflächen auf, wobei auf der vertikalen Schwenkachse eine Feder 23 bzw. 24 angeordnet ist, die die Keilflächen so zusammendrückt, dass die Stützräder 6 und 7 gegen den Druck der Feder 23 bzw. 24 in eine Mittelstellung gedrängt werden, die sie, wie später noch erläutert wird, einnehmen, wenn die Schwinge sich in einer ausgehobenen Position befindet.

An dem dem Stützrad zugewandten Ende der Schwingen 8 und 9 ist eine Aufnahme für einen hydropneumatischen Zylinder 25 bzw. 26 vorgesehen, der sich mit seinem anderen Ende über eine Lasche 27, die an dem rohrförmigen Träger 16 des Hilfrahmens 12 befestigt ist, abstützt. Da das Schwenkgelenk 13 vertikal von dem Schwenkgelenk 28 an der Lasche 27 beabstandet ist, bewirkt ein Zusammenziehen des hydropneumatischen Zylinders 25 bzw. 26 ein Anheben der Schwinge 8 bzw. 9 und damit ein Anheben des zugehörigen Stützrades 6 bzw. 7. Ein Ausfahren des hydropneumatischen Zylinders 27 bzw. 26 bewirkt hingegen, dass das zugehörige Stützrad 6 bzw. 7 auf den Boden bzw. die Fahrbahn gedrückt wird.

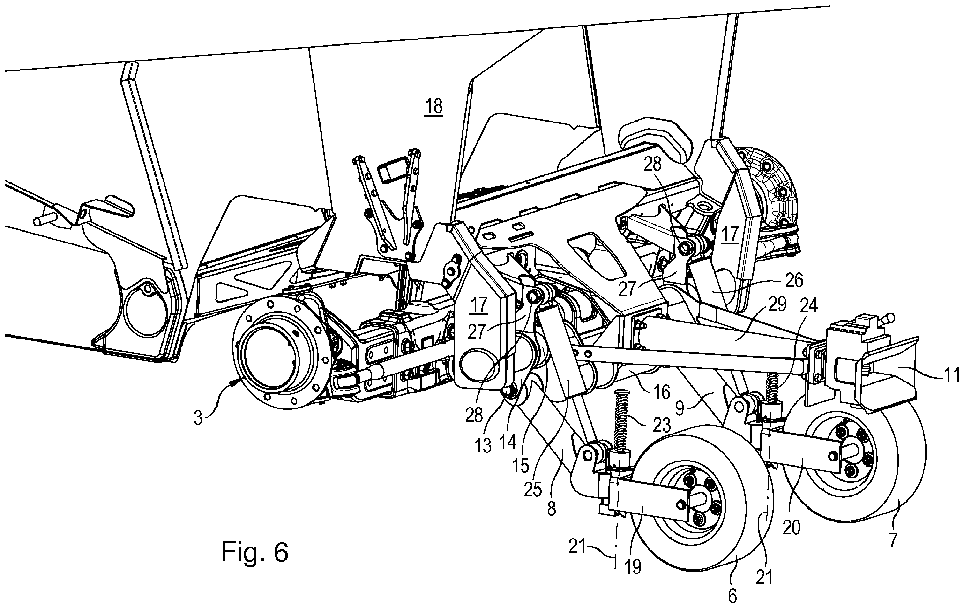

Wie insbesondere auch aus Fig. 6 ersichtlich ist, ist eine an einem der weiteren rohrförmigen Träger 16 ein Anhängebock 10 befestigt. Er erstreckt sich ebenfalls in Form eines rohrförmigen Trägers 29 nach hinten bis über die Stützräder 6 und 7 hinaus und trägt an seinem freien Ende das Zugmaul 11.

Die beiden hydropneumatischen Zylinder 25 und 26 können unabhängig voneinander betätigt werden, so dass das jeweils kurvenäußere Stützrad stärker mit Druck beaufschlagt werden kann als das kurveninnere Stützrad.

Im Folgenden wird die Wirkungsweise der Erfindung näher beschrieben.

Da sämtliche für die Stützradanordnung 5 befindlichen Bauteile an dem Hilfsrahmen 12 angebracht sind, kann die Stützradanordnung 5 einfach an das Chassis 18 des Mähdreschers 1 an hierfür vorgesehene Befestigungsstellen angeschraubt werden. Diese Befestigungsstellen müssen nicht extra verstärkt sein, weil sämtliche durch die Stützradanordnung auftretenden Kräfte zunächst im Hilfsrahmen 12 aufgefangen und durch diesen gleichmäßig auf das Chassis 18 verteilt werden. Wank- und Nicksensoren, die für die Ansteuerung der hydropneumatischen Federung der Stützräder vorgesehen sein können, lassen sich ebenfalls an dem Hilfsrahmen anbringen, so dass zum Mähdrescher selbst lediglich eine Hydraulikverbindung vorgesehen ist, die der Übersichtlichkeit halber ebenfalls nicht dargestellt ist.

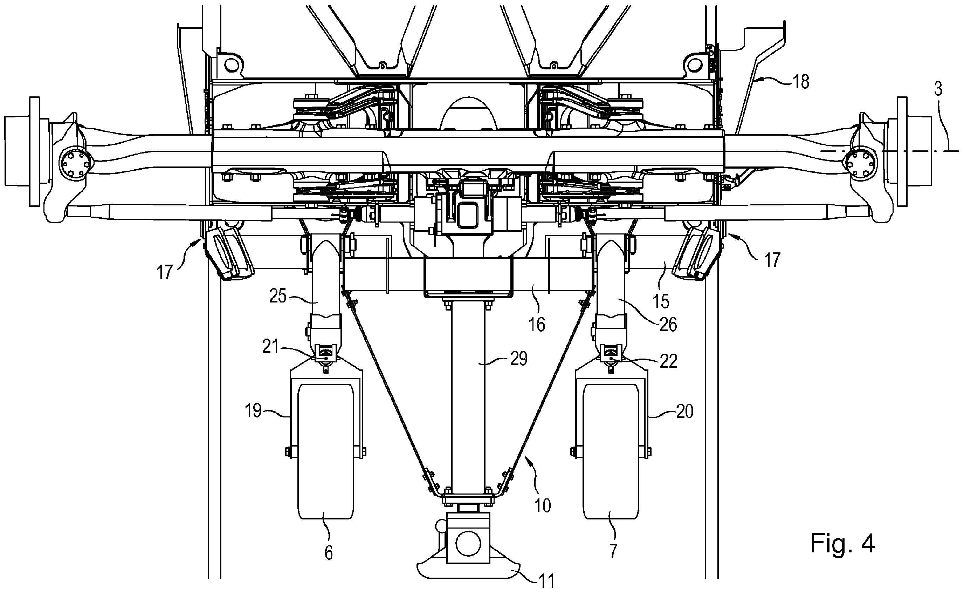

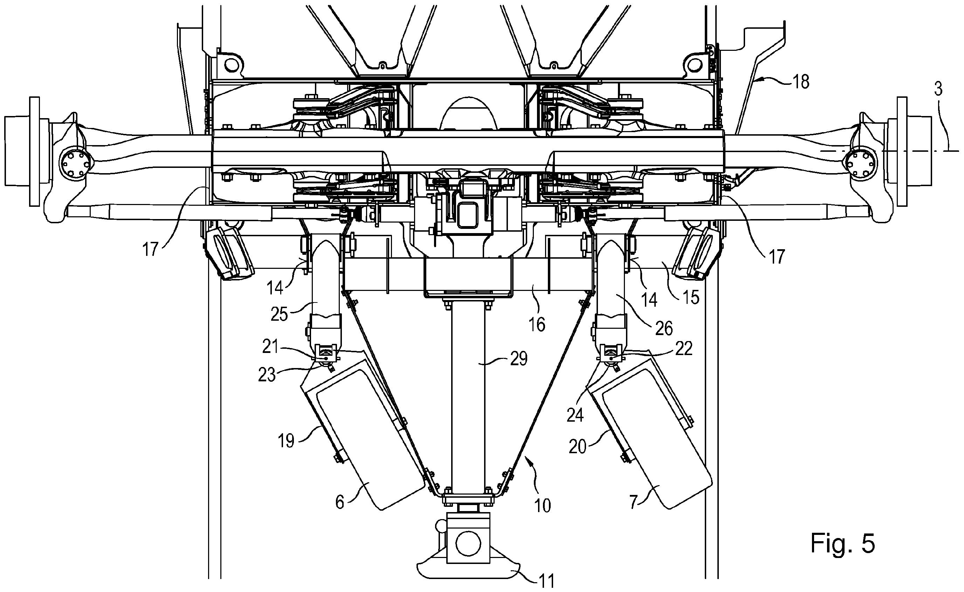

Die Stützräder 6 und 7 laufen stets hinterher, so dass sie bei Geradeausfahrt, wie sie beispielsweise in Fig. 4 dargestellt ist, parallel zur Längsachse des Mähdreschers ausgerichtet sind. Wenn der Mähdrescher eine Rechtskurve fährt, wie dies beispielsweise in Fig. 5 angedeutet ist, schwenken die nachlaufgeführten Stützräder 6 und 7 um die vertikalen Schwenkachsen 21 und 22 ebenfalls nach rechts. Mit Hilfe der Wanksensoren kann dabei festgestellt werden, dass sich der Mähdrescher versucht, in die Außenkurve zu legen. Dieses Signal kann dazu verwendet werden, den Druck in dem hydropneumatischen Zylinder 25 zu verstärken, um das linke, also kurvenäußere Stützrad 6 stärker auf den Boden zu drücken um damit der Wankbewegung entgegenzuwirken.

Die Schneidwalze 4 kann bei der Straßenfahrt in üblicher Weise an dem Zugmaul 11 des Anhängerbocks 10 angehängt werden, ohne dass die Stützräder 6 und 7 in irgendeiner Form stören.

Sobald der Mähdrescher auf dem Feld eingesetzt wird und die Schneidwalze 4 vor der Vorderachse 2 montiert ist, werden die Schwingen 8 und 9 mithilfe der hydropneumatischen Zylinder 25 und 26 angehoben, so dass sie keinen Bodenkontakt mehr haben. Aufgrund der Federn 23 und 24 an den vertikalen Schwenkgelenken 21 und 22 zentrieren sich die Radträger 19 und 20, so dass sich die Stützräder 6 und 7 parallel zur Längsmitte des Mähdreschers ausrichten.

Aus dem Vorbeschriebenen wird ersichtlich, dass die gesamte Stützradanordnung mit sämtlichen für die Entlastung der Hinterachse 3 vorgesehenen Bauteile an einem gemeinsamen Hilfsrahmen 12 angeordnet ist, ohne dass in die Konstruktion oder Mechanik des Mähdreschers eingegriffen werden muss. Das ermöglicht, dass die Stützradanordnung auch als Nachrüstteil für bestehende Mähdrescher oder selbstfahrende Erntemaschinen Verwendung finden kann. Großartige Änderungen statischer Art an dem Chassis sind nicht erforderlich, weil die Quertraversen 15 und die rohrförmigen Träger 16 für eine hinreichende Verwindungssteifigkeit des Hilsrahmen sorgen, so dass Kräfte und Momente in dem Hilfsrahmen 12 aufgenommen werden.

## Patentansprüche

1. Mähdrescher (1) mit einem Chassis (18), einer Vorderachse (2) und mit einer Hinterachse (3) sowie hinter der Hinterachse (3) angeordneten lenkbaren Stützrädern (6, 7) zur Entlastung der Hinterachse bei Straßenfahrt, wobei die Stützräder (6, 7) aus einer ausgehobenen Ruhestellung in eine Fahrstellung absenkbar angeordnet sind, **dadurch gekennzeichnet, dass** die Stützräder (6, 7) über jeweils eine Schwinge (8, 9) einzeln an einem gemeinsamen Hilfsrahmen (12) angelenkt und nachlaufgesteuert sind, wobei der Hilfsrahmen (12) an dem Chassis (18) befestigt ist.

2. Mähdrescher nach Anspruch 1, **dadurch gekennzeichnet, dass** die Schwingen (8, 9) hydropneumatisch gefedert sind.

3. Mähdrescher nach Anspruch 2, **dadurch gekennzeichnet, dass** die hydropneumatische Federung jeder Schwinge (8, 9) unabhängig von der anderen Schwinge (9, 8) ansteuerbar ist.

4. Mähdrescher nach einem der Ansprüche 1 bis 3, **dadurch gekennzeichnet, dass** an dem Hilfsrahmen die beiden Anlenkpunkte (14) der Schwingen (8, 9) über Rundrohre (Quertraverse 15) miteinander verbunden sind.

5. Mähdrescher nach einem der Ansprüche 1 bis 4, **dadurch gekennzeichnet, dass** die beiden Stützräder (6, 7) in gabelförmigen Radträgern (19, 20) gehalten sind, in die an den freien Enden der Schwingen (8, 9) über vertikale Schwenkachsen (21, 22) angelenkt sind.

6. Mähdrescher nach Anspruch 5, **dadurch gekennzeichnet, dass** die Radträger (19, 20) über Federn (23, 24) mittenzentriert sind.

7. Mähdrescher nach einem der Ansprüche 2 bis 3, **dadurch gekennzeichnet, dass** sämtliche für die Anhebung und Absenkung der Stützräder (6, 7) sowie der hydropneumatischen Federung erforderlichen Bauteile (hydropneumatische Zylinder (25, 26)) am Hilfsrahmen (12) angebracht sind.

8. Mähdrescher nach einem der Ansprüche 2, 3 oder 7 , **dadurch gekennzeichnet, dass** die hydropneumatische Federung der Schwingen (8, 9) mit Nick- und Wanksensoren verbunden ist und in Abhängigkeit deren Signale den Anpressdruck des jeweiligen Stützrades (6, 7) auf die Straße verstärkt oder abschwächt.

9. Mähdrescher nach einem der Ansprüche 1 bis 8, **dadurch gekennzeichnet, dass** an dem Hilfsrahmen ein Anhängerbock mit einem Zugmaul (11) angebracht ist.

10. Mähdrescher nach Anspruch 9, **dadurch gekennzeichnet, dass** die Tiefe des Anhängerbocks (10) derart bemessen ist, dass das Zugmaul (11) in Fahrtrichtung hinter den Stützrädern (6, 7) liegt.

## Claims

1. A combine harvester (1) with a chassis (18), a front axle (2) and with a rear axle (3) as well as steerable support wheels (6, 7) disposed behind the rear axle (3) to relieve the load on the rear axle when travelling on roads, wherein the support wheels (6, 7) are disposed so as to be capable of dropping from a raised rest position into a travelling position, **characterized in that** the support wheels (6, 7) are individually pivoted by means of a respective swing arm (8, 9) on a common subframe (12) and are self-steering, wherein the subframe (12) is mounted on the chassis (18).

2. The combine harvester according to claim 1, **characterized in that** the swing arms (8, 9) are suspended hydropneumatically.

3. The combine harvester according to claim 2, **characterized in that** the hydropneumatic suspension of each swing arm (8, 9) can be activated independently of the other swing arm (9, 8).

4. The combine harvester according to one of claims 1 to 3, **characterized in that** on the subframe, the two points of articulation (14) of the swing arms (8, 9) are connected together by means of round tubes (cross beams 15).

5. The combine harvester according to one of claims 1 to 4, **characterized in that** the two support wheels (6, 7) are retained in bifurcated wheel mounts (19, 20), into which the free ends of the swing arms (8, 9) are pivoted about vertical pivotal axes (21, 22).

6. The combine harvester according to claim 5, **characterized in that** the wheel mounts (19, 20) are centrally positioned by means of springs (23, 24).

7. The combine harvester according to claim 2 or claim 3, **characterized in that** all of the components (hydropneumatic cylinders (25, 26)) required for raising and dropping the support wheels (6, 7) as well as the hydropneumatic suspension are attached to the subframe (12).

8. The combine harvester according to one of claims 2, 3 or 7, **characterized in that** the hydropneumatic suspension of the swing arms (8, 9) is connected to pitch and roll sensors and increases or reduces the contact pressure of the respective support wheel (6, 7) as a function of their signals.

9. The combine harvester according to one of claims 1 to 8, **characterized in that** a trailer bracket with a trailer coupling (11) is attached to the subframe.

10. The combine harvester according to claim 9, **characterized in that** the depth of the trailer bracket (10) is such that the trailer coupling (11) is located behind the support wheels (6, 7) in the direction of travel.

## Revendications

1. Moissonneuse-batteuse (1) comprenant un châssis (18), un essieu avant (2) et un essieu arrière (3) ainsi que des roues d'appui (6, 7) orientables, disposées derrière l'essieu arrière (3) et destinées à décharger l'essieu arrière lors du déplacement sur route, les roues d'appui (6, 7) étant disposées de manière à pouvoir être abaissées d'une position de repos relevée à une position de déplacement, **caractérisée en ce que** les roues d'appui (6, 7) sont articulées chacune individuellement par l'intermédiaire d'un bras oscillant (8, 9) sur un cadre auxiliaire (12) commun et sont commandées en poursuite, le cadre auxiliaire (12) étant fixé au châssis (18).

2. Moissonneuse-batteuse selon la revendication 1, **caractérisée en ce que** les bras oscillants (8, 9) sont dotés d'une suspension hydropneumatique.

3. Moissonneuse-batteuse selon la revendication 2, **caractérisée en ce que** la suspension hydropneumatique de chaque bras oscillant (8, 9) peut être activée indépendamment de l'autre bras oscillant (9, 8).

4. Moissonneuse-batteuse selon l'une des revendications 1 à 3, **caractérisée en ce que** sur le cadre auxiliaire, les deux points d'articulation (14) des bras oscillants (8, 9) sont reliés l'un à l'autre par des tubes ronds (traverse 15).

5. Moissonneuse-batteuse selon l'une des revendications 1 à 4, **caractérisée en ce que** les deux roues d'appui (6, 7) sont tenues dans des supports de roues (19, 20) en forme de fourches qui sont articulés sur les extrémités libres des bras oscillants (8, 9), par l'intermédiaire d'axes de pivotement verticaux (21, 22).

6. Moissonneuse-batteuse selon la revendication 5, **caractérisée en ce que** les supports de roues (19, 20) sont centrés au milieu par l'intermédiaire de ressorts (23, 24).

7. Moissonneuse-batteuse selon l'une des revendications 2 à 3, **caractérisée en ce que** tous les éléments (vérins hydropneumatiques (25, 26)) nécessaires à la levée et à la descente des roues d'appui (6, 7) et de la suspension hydropneumatique sont montés sur le cadre auxiliaire (12).

8. Moissonneuse-batteuse selon l'une des revendications 2, 3 ou 7, **caractérisée en ce que** la suspension hydropneumatique des bras oscillants (8, 9) est reliée à des capteurs de tangage et de roulis et augmente ou réduit la pression d'application de la roue d'appui (6, 7) respective sur la route, en fonction des signaux de ces capteurs.

9. Moissonneuse-batteuse selon l'une des revendications 1 à 8, **caractérisée en ce qu'**un étrier d'attelage muni d'une mâchoire de traction (11) est monté sur le cadre auxiliaire.

10. Moissonneuse-batteuse selon la revendication 9, **caractérisée en ce que** la profondeur de l'étrier d'attelage (10) est prévue telle que la mâchoire de traction (11) se situe derrière les roues d'appui (6, 7), dans le sens du déplacement.
